(19)

**Europäisches Patentamt**
**European Patent Office**
**Office européen des brevets**

(11) **EP 4 607 477 A1**

(12) **EUROPEAN PATENT APPLICATION**

(43) Date of publication:
**27.08.2025 Bulletin 2025/35**

(21) Application number: **25153341.0**

(22) Date of filing: **22.01.2025**

(51) International Patent Classification (IPC):
**G06V 10/82** (2022.01)     **G06V 40/16** (2022.01)
**G06V 40/18** (2022.01)     **G06F 3/01** (2006.01)
**G06T 3/60** (2024.01)     **G06T 7/73** (2017.01)
**G06T 7/80** (2017.01)

(52) Cooperative Patent Classification (CPC):
**G06T 3/60; G06F 3/012; G06F 3/013; G06T 7/73;**
**G06T 7/80; G06V 10/82; G06V 40/161;**
**G06V 40/165; G06V 40/18; G06V 40/193**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.02.2024 US 202418584782**

(71) Applicant: **INTEL Corporation**
**Santa Clara, CA 95054 (US)**

(72) Inventors:
• **SUNRAY, Elad**
  **3229612 Haifa (IL)**
• **RUDOY, Dmitry**
  **3298110 Haifa (IL)**
• **LEVY, Noam**
  **Sunnyvale, CA, 94087 (US)**

(74) Representative: **Samson & Partner Patentanwälte mbB**
**Widenmayerstraße 6**
**80538 München (DE)**

(54) **DETERMINATION OF GAZE POSITION ON MULTIPLE SCREENS USING A MONOCULAR CAMERA**

(57)     Systems and methods for real-time, efficient, monocular gaze position determination that can be performed in real-time on a consumer-grade laptop. Gaze tracking can be used for human-computer interactions, such as window selection, user attention on screen information, gaming, augmented reality, and virtual reality. Gaze position estimation from a monocular camera involves estimating the line-of-sight of a user and intersecting the line-of-sight with a two-dimensional (2D) screen. The system uses a neural network to determine gaze position within about four degrees of accuracy while maintaining very low computational complexity. The system can be used to determine gaze position across multiple screens, determining which screen a user is viewing as well as a gaze target area on the screen. There are many different scenarios in which a gaze position estimation system can be used, including different head poses, different facial expressions, different cameras, different screens, and various illumination scenarios.

FIG. 1

EP 4 607 477 A1

**Description**

Technical Field

This disclosure relates generally to gaze position on a screen, and in particular to automatic determination of gaze positions on one or more screens using a monocular camera.

Background

Determination of gaze position (where a person is looking) can be used to enhance interactions with a display. For examples gaze position determination can provide information for understanding human intention. In particular, eye gaze is a form of non-verbal communication that can provide insights into human cognition and behavior. Eye gaze information can be used by applications for human-computer interaction and for head-mounted devices. However, systems for gaze position estimation are unreliable and thus generally unusable.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

Figure (FIG.) 1 illustrates a DNN system, in accordance with various embodiments.
FIG. 2 illustrates an example overview of a gaze position determination module framework that can be used for calibration and/or training, in accordance with various embodiments.
FIGS. 3A-3B illustrate examples of gaze position determination for a system including two screens, in accordance with various embodiments.
FIGS. 4A-4B illustrate an example overview of a gaze position determination system, in accordance with various embodiments.
FIG. 5 shows an example of 3D world points captured by camera and projected onto a captured image frame.
FIG. 6 shows an example of mirror-based calibration system, in accordance with various embodiments.
FIG. 7 shows an example of normalization, in accordance with various embodiments.
FIG. 8 shows an example of a deep neural network for processing the cropped normalized input images to generate an estimated gaze direction, in accordance with various embodiments.
FIG. 9 shows an example of gaze-screen projection, in accordance with various embodiments.
FIG. 10 is a flowchart showing a method 1000 of eye gaze determination, in accordance with various embodiments.
FIG. 11 illustrates an example DNN, in accordance with various embodiments.
FIG. 12 is a block diagram of an example computing device 1200, in accordance with various embodiments.

Detailed Description

*Overview*

Reliable, real-time, monocular gaze tracking can greatly improve human-computer interactions and can be used for many applications, such as window selection, user attention on screen information, gaming, and so on. Gaze position estimation from a monocular camera involves estimating the line-of-sight of a user and intersecting the line-of-sight with a two-dimensional (2D) screen, all based on a single camera input. Since most interesting eye gaze targets are small and far from the user, every small estimation error in the gaze direction can result in a large error in the position on the screen. Thus, high angular accuracy is needed for accurate determination of gaze position. Additionally, the distance between the eyes and the screen is generally not known, and the lack of depth information can make it difficult to understand the geometry of the scene. Furthermore, each user is physically different, having a unique eye shape, eye color, eye location on the face, distance between eyes, and so on. Users also have biological eye structure differences which can lead to inherent ambiguity. Moreover, there are many different scenarios in which a gaze position estimation system can be used, including different head poses, different facial expressions, different cameras, different screens, and various illumination scenarios.

In order to determining gaze position for both single monitor computing device set-ups and in set-ups having multiple screens, precise face-camera-screen alignment is needed. In various aspects, determining gaze position across multiple screens poses an increased challenge, since the face-camera-screen alignment can be different from each screen. In general, any gaze position determination system should be computationally efficient and able to run in real-time on a consumer-grade laptop or other computing device.

Systems and methods are provided herein for efficient and robust gaze position determination that can be performed in real-time on a consumer-grade laptop. The gaze position determination system uses a monocular camera, head pose tracking, gaze angle estimation, and a method of geometrical alignment and calibration. The system can determine gaze position within a few degrees of accuracy while maintaining very low computational complexity. Additionally, the gaze position determination system includes a technique for predicting the reliability of the gaze position determination, thereby allowing for robust usage of the system. The systems and methods provided herein include data, training, network architecture, temporal filtering, and real time inference.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

*Example DNN System*

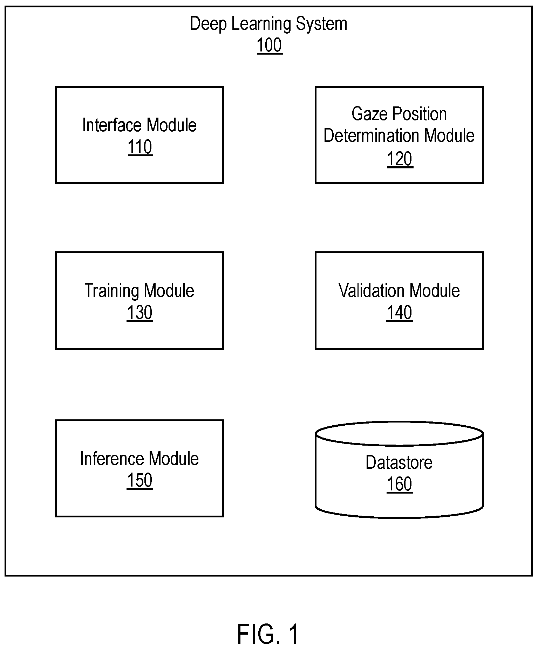

FIG. 1 is a block diagram of an example DNN system 100, in accordance with various embodiments. The DNN system 100 trains DNNs for various tasks, including determination of gaze position on a screen. The DNN system 100 includes an interface module 110, a gaze position determination module 120, a training module 130, a validation module 140, an inference module 150, and a datastore 160. In other embodiments, alternative configurations, different or additional components may be included in the DNN system 100. Further, functionality attributed to a component of the DNN system 100 may be accomplished by a different component included in the DNN system 100 or a different system.

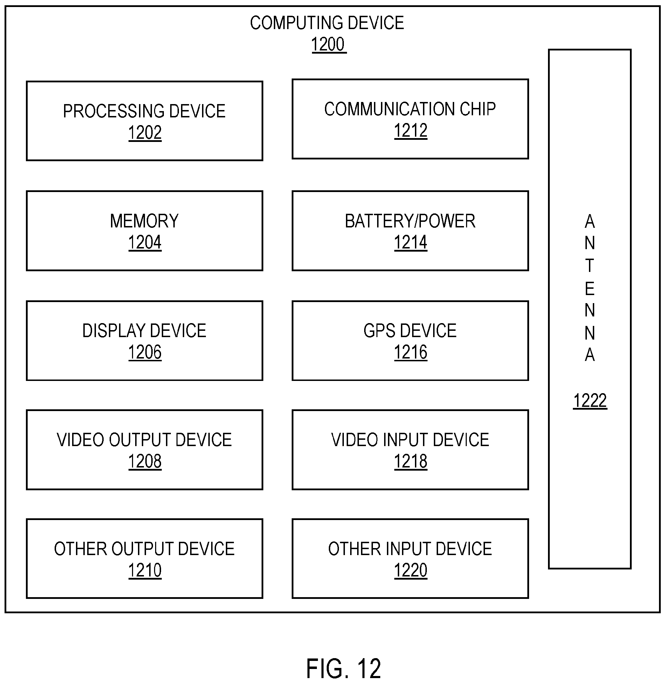

The DNN system 100 or a component of the DNN system 100 (e.g., the training module 130 or inference module 150) may include the computing device 1200 in FIG. 12.

The interface module 110 facilitates communications of the DNN system 100 with other systems. As an example, the interface module 110 supports the DNN system 100 to distribute trained DNNs to other systems, e.g., computing devices configured to apply DNNs to perform tasks. As another example, the interface module 110 establishes communications between the DNN system 100 with an external database to receive data that can be used to train DNNs or input into DNNs to perform tasks. In some embodiments, data received by the interface module 110 may have a data structure, such as a matrix. In some embodiments, data received by the interface module 110 may be an image, a series of images, and/or a video stream.

The gaze position determination module 120 determines a user's gaze position on one or more screens. The gaze position determination module 120 performs gaze position determination in real-time. In general, the gaze position determination module includes multiple components which can perform functions such as scene geometry understanding, geometric normalization, normalized gaze estimation and uncertainty, de-normalization, projection, and temporal filtering.

During training, the gaze position determination module 120 can use a training data set including labeled input images and image sets, where the images are of faces looking at a screen, and the training data set includes corresponding screen and gaze position data for each image. In some examples, the training data includes images that have undergone face frontalization and camera normalization, where the image data is adjusted such that it shows a front view of the face. Additionally, the training data set includes corresponding gaze position data such as a selected target area on a selected screen. In various examples, during training, the gaze position determination module 120 outputs a gaze position estimation, such as an estimated target area on a screen. Differences between the estimated target area on the screen and the training data indicating a known input target area on a selected screen are determined, and, as the gaze position determination module 120 is trained, the differences are minimized.

In various examples, as described herein, the gaze position determination module 120 includes one or more neural networks for processing input images. In some examples, the gaze position determination module 120 includes one or more deep neural networks (DNN) for processing input images. The training module 130 trains DNNs using training datasets. In some embodiments, a training dataset for training a DNN may include one or more images and/or videos, each of which may be a training sample. In some examples, the training module 130 trains the gaze position determination module 120. The training module 130 may receive real-world video data for processing with the gaze position determination module 120 as described herein. In some embodiments, the training module 130 may input different data into different layers of the DNN. For every subsequent DNN layer, the input data may be less than the previous DNN layer. The training module 130 may adjust internal parameters of the DNN to minimize a difference between training data output and the input data processed by the gaze position determination module 120. In some examples, the difference can be the difference between corresponding target area on a screen output by the gaze position determination module 120 and the training data target area. In some examples, the difference between corresponding outputs can be measured as the number of pixels in the corresponding output frames that are different from each other.

In some embodiments, a part of the training dataset may be used to initially train the DNN, and the rest of the training dataset may be held back as a validation subset used by the validation module 140 to validate performance of a trained DNN. The portion of the training dataset not including the tuning subset and the validation subset may be used to train the DNN.

The training module 130 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 130 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 130 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 defines the architecture of the DNN, the training module 130 inputs a training dataset into the DNN. The training dataset includes a plurality of training samples. An example of a training dataset includes a series of images of a video stream. Unlabeled, real-world video is input to the gaze position determination module, and processed using the gaze position determination module parameters of the DNN to produce two different model-generated outputs: a first time-forward model-generated output and a second time-reversed model-generated output. In the backward pass, the training module 130 modifies the parameters inside the DNN ("internal parameters of the DNN") to minimize the differences between the first model-generated output is and the second model generated output. The internal parameters include weights of filters in the convolutional layers of the DNN. In some embodiments, the training module 130 uses a cost function to minimize the differences.

The training module 130 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the DNN. The validation module 140 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the DNN. In one embodiment, the training module 130 may iteratively re-train the DNN until the occurrence of a stopping condition, such as the accuracy measurement indication that the DNN may be sufficiently accurate, or a number of training rounds having taken place.

The inference module 150 applies the trained or validated DNN to perform tasks. The inference module 150 may run inference processes of a trained or validated DNN. In some examples, inference makes use of the forward pass to produce model-generated output for unlabeled real-world data. For instance, the inference module 150 may input real-world data into the DNN and receive an output of the DNN. The output of the DNN may provide a solution to the task for which the DNN is trained for.

The inference module 150 may aggregate the outputs of the DNN to generate a final result of the inference process. In some embodiments, the inference module 150 may distribute the DNN to other systems, e.g., computing devices in communication with the DNN system 100, for the other systems to apply the DNN to perform the tasks. The distribution of the DNN may be done through the interface module 110. In some embodiments, the DNN system 100 may be implemented in a server, such as a cloud server, an edge service, and so on. The computing devices may be connected to the DNN system 100 through a network. Examples of the computing devices include edge devices.

The datastore 160 stores data received, generated, used, or otherwise associated with the DNN system 100. For example, the datastore 160 stores video processed by the gaze position determination module 120 or used by the training module 130, validation module 140, and the inference module 150. The datastore 160 may also store other data generated by the training module 130 and validation module 140, such as the hyperparameters for training DNNs, internal parameters of trained DNNs (e.g., values of tunable parameters of activation functions, such as Fractional Adaptive Linear Units (FALUs)), etc. In the embodiment of FIG. 1, the datastore 160 is a component of the DNN system 100. In other embodiments, the datastore 160 may be external to the DNN system 100 and communicate with the DNN system 100 through a network.

*Example Gaze Estimation*

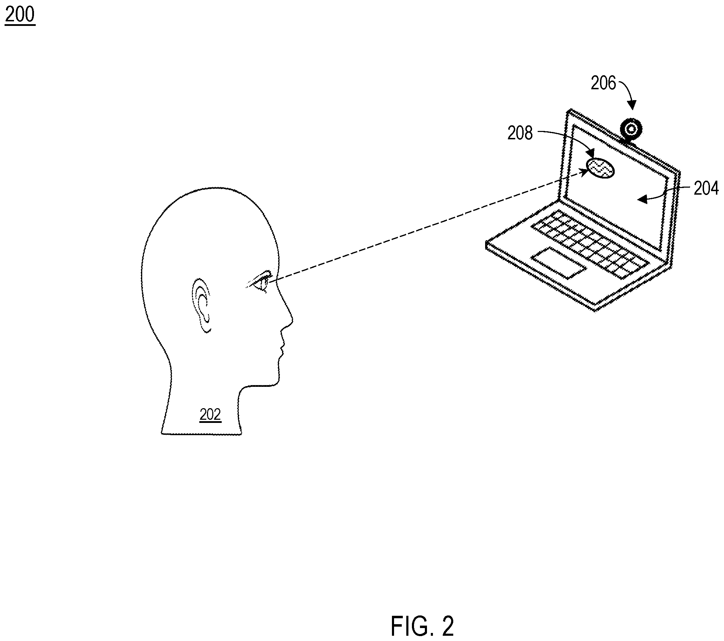

FIG. 2 illustrates an example 200 of gaze position determination, in accordance with various embodiments. In particular, as shown in FIG. 2, a person 202 looks at a computer screen 204. As shown in FIG. 2, the computer screen 204 is part of a laptop. In other examples, the computer screen can be a monitor that is separate from a computing device. The system includes a camera 206. The camera 206 can be a separate camera, or it can be integrated into the laptop and/or the computer screen 204. In various examples, the camera 206 captures an image of the person 202, and the image is used by a gaze position determination module to identify a selected target area 208 on the computer screen 204 corresponding to a user gaze. In particular, a gaze position determination module can determine the area 208 of the computer screen 204 that the person 202 is looking at.

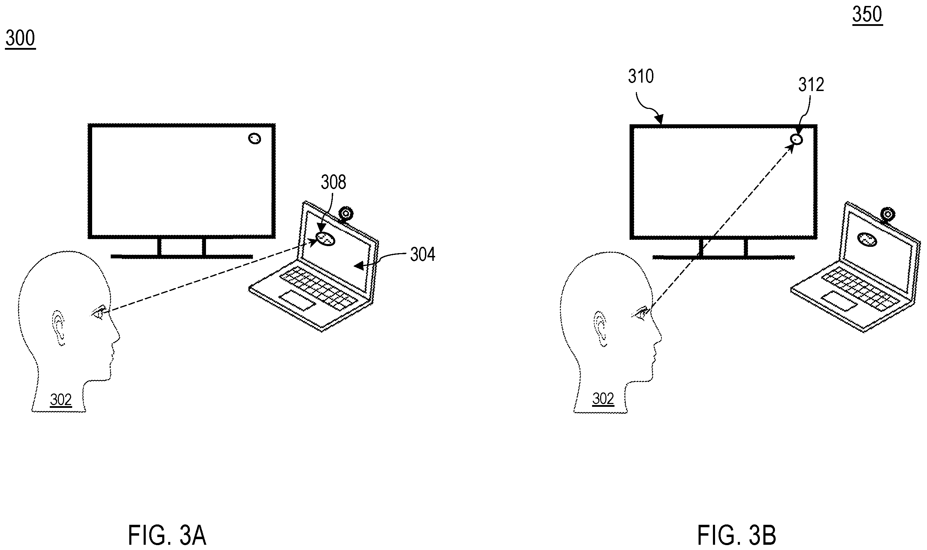

FIGS. 3A-3B illustrate examples 300, 350 of gaze position determination for a system including two screens, in accordance with various embodiments. As shown in FIG. 3A, the person 302 is looking at a first selected area 308 on a computer screen 304 that is integrated into a laptop. As shown in FIG. 3B, the person 302 is looking at a second selected area 312 on an auxiliary monitor 310 positioned next to the laptop. According to various examples, performing gaze position determination for multiple screens includes utilization of precise alignment data for face-to-camera, face-to-screen (for each screen), and camera-to-screen (for each screen).

*Example Gaze Position Determination Framework*

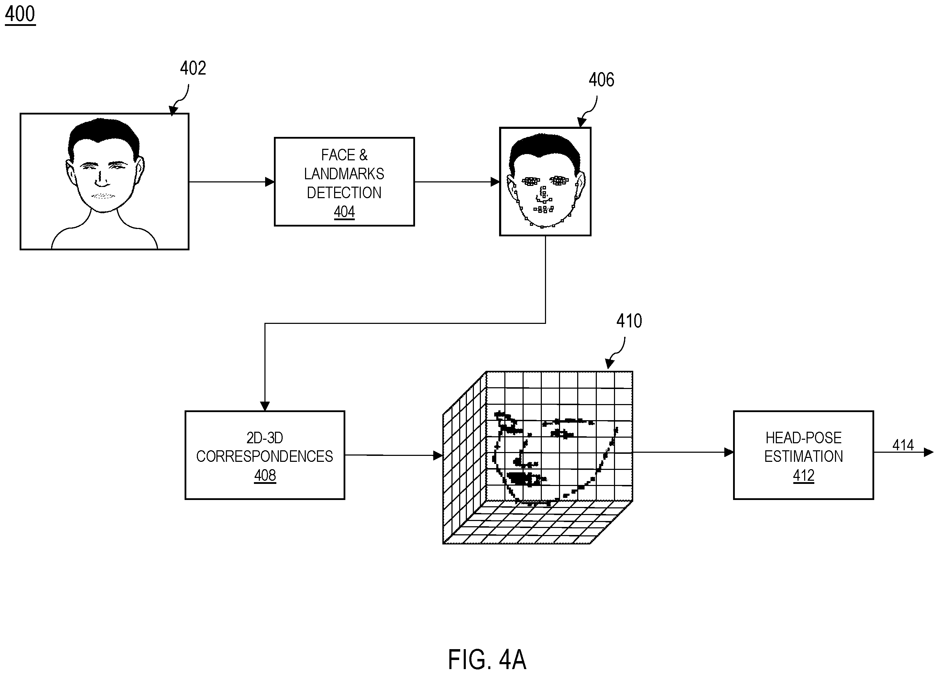

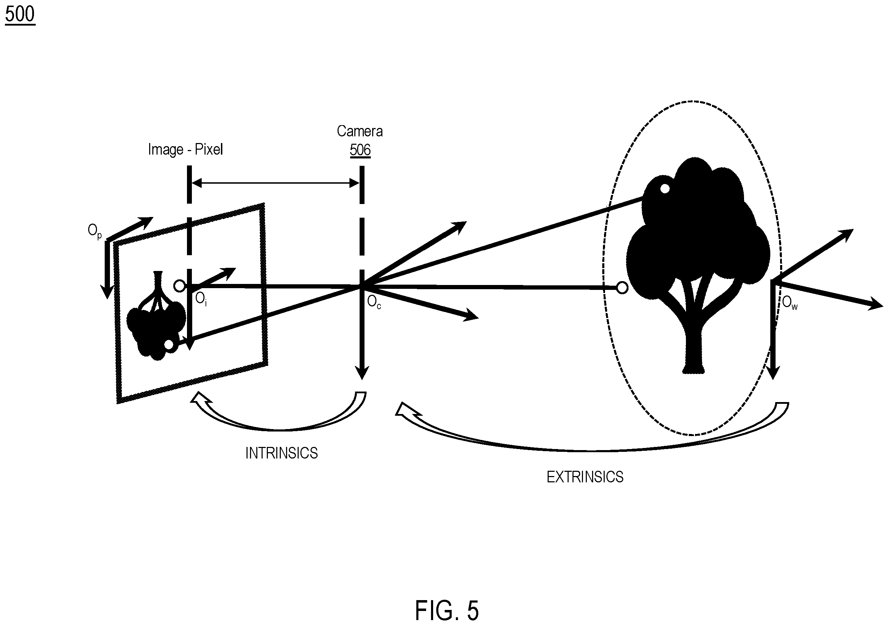

FIGS. 4A-4B illustrate an example overview of a gaze position determination system 400, in accordance with various embodiments. According to various aspect, the gaze position determination system 400 is a calibrated system. In various examples, the gaze position determination system 400 can be calibrated as described herein, for example, with respect to FIG. 5. The calibration process allows for understanding the geometry of the computing device set-up. For example, calibration provides information about the properties of the camera and how 3D world points are projected on images captured by the camera. Calibration can also provide information about the computing system, such as the number of screens, and the configuration. Additionally, calibration determines the coordinate transformation between the camera coordinate system and the screen coordinate system. FIG. 5 shows an example 500 of 3D world points captured by camera 506 and projected onto a captured image frame. The extrinsic parameters of the camera coordinate system affect the projection of the 3D world points to the camera. The intrinsic parameters of the of the camera coordinate system affect the projection of the captured data from the camera to the image frame. In various examples, the system 400 can determine gaze position within about four degrees of accuracy while maintaining very low computational complexity. In some examples, the system can determine gaze position within about three degrees of accuracy while maintaining very low computational complexity.

According to various implementations, system calibration is performed once for any selected computing device set-up, and, so long as the camera and monitors remain located in their same positions, the process is not repeated. If the system changes (e.g., if any computing devices and/or monitors move positions, and/or the camera is moved), system calibration can be repeated.

One process for calibration is a camera calibration and ruler measurement method. This method works well in a computing device set-up in which all the monitors and the camera are on the same plane, such as in a typical laptop set-up. Using this method, the camera intrinsic calibration can be done using a conventional calibration tool and a checkerboard pattern imaged from various positions. Examples of conventional calibration tools include MATLAB's calibration tool and Open-CV's calibration tool. Additionally, the camera calibration and ruler measurement method includes physically measuring camera-to-screen distances, including the distance from a corner of each monitor screen to the camera. In some examples, the camera calibration and ruler measurement method works well for a computing device set-up such as a laptop with an integrated camera. In some examples, any distance-measurement method can be used to determine the physical distance from a corner of a monitor screen to the camera. In some examples, the distance between the corner of a laptop monitor screen and an integrated laptop camera is a known distance that is included in laptop specifications, which may be stored on the laptop and available for the calibration system to access.

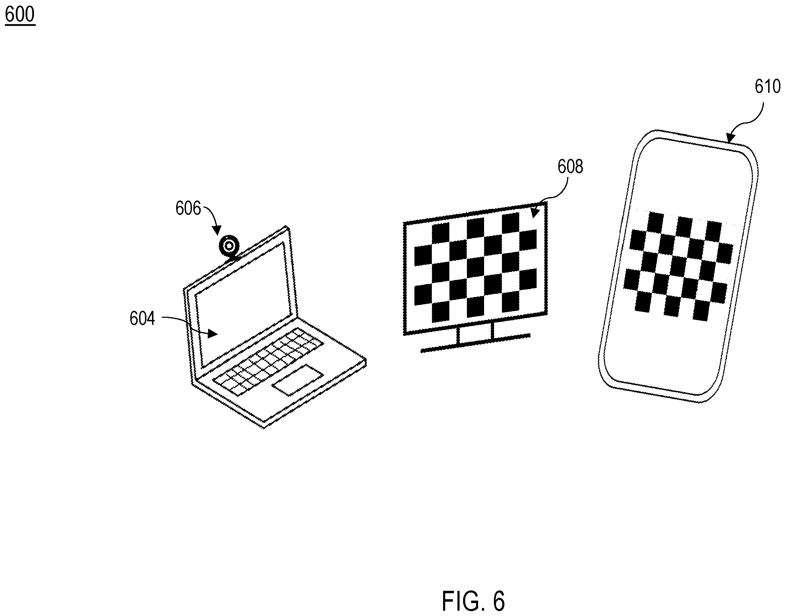

A second process for calibration is a mirror-based calibration method. FIG. 6 shows an example of mirror-based calibration system 600, in accordance with various embodiments. In general, the mirror-based calibration method can be used to calibrate a multi-screen computing device set-up, in which one or more of the screens is not in the same plane as the camera. The mirror-based calibration method can simultaneously calibrate camera intrinsic characteristic as well as extrinsic geometric properties with respect to a monitor 608 displaying a checkerboard pattern. In various examples, the monitor 608 can display any known and recognizable pattern for the mirror-based calibration method. In general, in a computing device set up with multiple monitors, the monitors 604, 608 are facing the same general direction (towards the user who is using the monitors) and the camera 606 is also directed towards the user. Thus, the area visible to the camera 606 does not generally include the monitor(s) 604, 608 in a computing device set-up. The mirror-based calibration method includes holding a mirror 610 in front of the camera 606 and the monitor(s) 604, 608 and moving the mirror 610 around, allowing the camera 606 to capture images of the monitor(s) 604, 608 and of the computing device set-up in the mirror 610. Using this method, the camera 606 can image the monitor(s) 604, 608 and the calibration process can determine geometric relationships between the monitors 604, 608. Additionally, the calibration can determine a physical distance between a corner of each monitor screen and the camera 606, as well any angles associated with their geometric positional relationship. In general, the calibration process can be run on calibration software.

With reference again to FIG. 4A, the gaze position determination system 400 receives a captured image 402 from an image sensor (e.g., a camera). The captured image 402 is a real-time image frame from the image sensor and includes the face of a user. The gaze position determination system 400 then determines where the user is located in 3D space. In particular, the gaze position determination system 400 determines where the user is located with respect to the image sensor and the screen(s). A face and landmark detection module 404 has information about the geometry of a typical human face.

To localize the face, the face and landmark detection module 404 processes the image 402 and detects the face in the image 402. In particular, the face and landmark detection module 404 determines where in the 2D image 402 the user's face is located, and where in the image 402 various facial features are located. The facial features can include eyes, nose, mouth, eyebrows, chin, cheeks, ears, among others. The features can be labeled on the image to generate the output feature image 406 which includes the image feature locations in 2D projected image space. In various examples, the face and landmark detection module 404 uses various automated image-based face and landmark detection tools.

In some examples, a 2D-3D correspondence module 408 processes the 2D feature image 406 to estimate a 3D location of face features in the camera coordinate system. The 2D-3D correspondence module 408 can use a three-dimensional (3D) model of an average human face, including information about distance between eyes, mouth, nose, and other features of the human face. In some examples, 2D-3D correspondence module 408 uses information about image sensor properties, and how a 3D scene in the world is projected onto the image sensor, resulting in the two-dimensional (2D) image 402 (and feature image 406). In some examples, the 2D-3D correspondence module 408 determines a user's location in 3D with respect to the camera using the identified location of the facial features in the feature image 406, the 3D model of the average human face, and the relationship between the image sensor and the screen(s) as determined during calibration. In various examples, the 2D-3D correspondence module 408 solves an inverse computation known as Perspective-n-Point (PnP) to estimate the 3D location of face features in the camera coordinate system, and outputs a 3D feature location output 410.

Using the 3D feature location output 410, a head pose estimation module 412 can determine a transformation of the 3D feature location output 410 (which represent the head and face of a user) from the camera coordinate system to a selected model coordinate system. The output 414 from the estimation module 412 includes the transformed 3D feature locations.

In some examples, during runtime of the gaze position determination system 400, for each image frame, the face and landmark detection module 404, the 2D-3D correspondence module 408, and the estimation module 412, determine the 3D location and pose of the user's face with respect to the camera. In some examples, this process is done at a lower framerate to reduce computation power usage. For instance, the process can be repeated on every other frame, every third frame, every fifth frame, every tenth frame, etc.

The output 414 from the estimation module 412, including the transformed 3D feature locations, are input to a face frontalization and camera normalization module 420. In general, the face frontalization and camera normalization module 420 performs geometric normalization to resolve any invariances resulting from different cameras, different camera models, various positions, and different poses. To achieve the invariance to different cameras and head positions in the scene, the face frontalization and camera normalization module 420 transforms the scene to a normalized 3D space, where the 2D image is created by a normalized virtual camera. In various examples, a normalized virtual camera has constant intrinsic parameters and is located directly in front of the user at a constant distance. The normalized virtual camera is not an actual real-world camera.

In some examples, a normalization method for generating the normalized virtual camera includes camera alignment, camera transformation, and image warping. Camera alignment uses the 3D understanding of the scene (including the transformed 3D feature locations) to "move" the virtual camera to a location directly in front of the face. Specifically, the virtual camera is positioned at a fixed distance from the face and is oriented towards the face center. Camera transformation includes replacing the camera intrinsic properties with a fixed set of intrinsic parameters. Image warping includes warping the captured image to create a new normalized image using the new intrinsic and extrinsic parameters.

In various examples, normalization is performed to create a level of consistency of for images input to the gaze estimation module 422. Normalization results in consistency among images input to the gaze estimation module 422, including consistency among input faces, such as approximate consistency in face sizes and/or feature sizes.

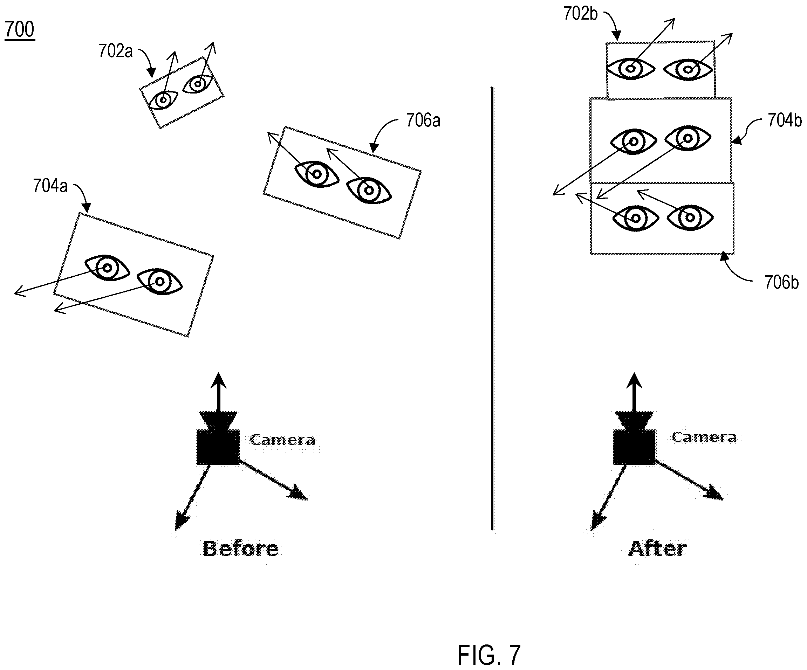

FIG. 7 shows an example of normalization, in accordance with various embodiments. In particular, FIG. 7 shows three different input images 702a, 704a, 706a as received at the face frontalization and camera normalization module 420. The right hand side of FIG. 7 shows the three input images after normalization resulting in three normalized images 702b, 704b, 706c.

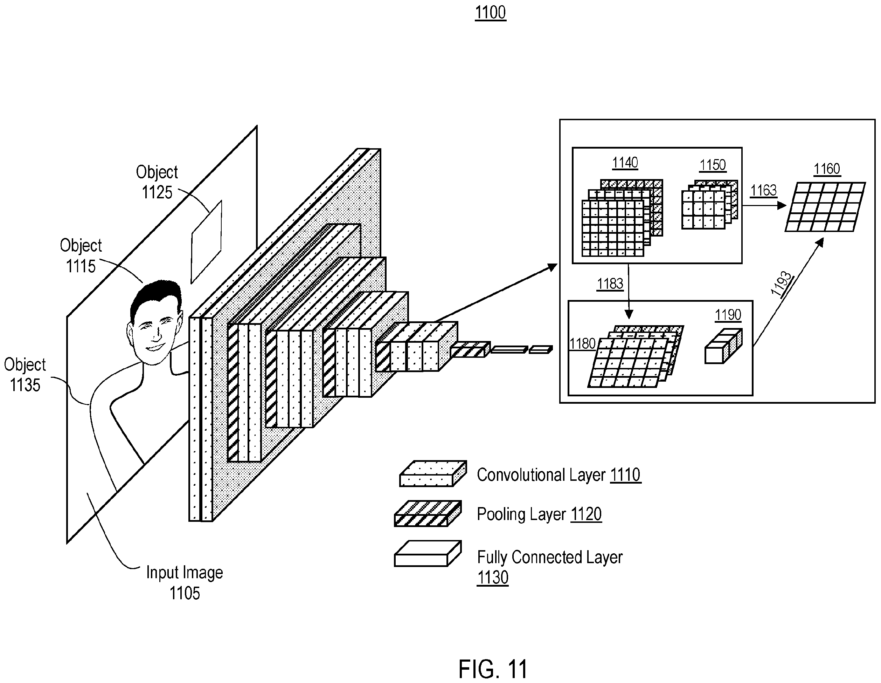

In various implementations, the normalized image from the face frontalization and camera normalization module 420 is output to a gaze estimation module 422. In some examples, the gaze estimation module crops the input normalized image to include just the face of the user. The cropped normalized image is input to a neural network 424. The neural network 424 can be a deep neural network, as discussed with respect to FIG. 1, the neural network 424 can be a convolutional neural network as discussed with respect to FIG. 11, and the neural network 424 can be a transformer.

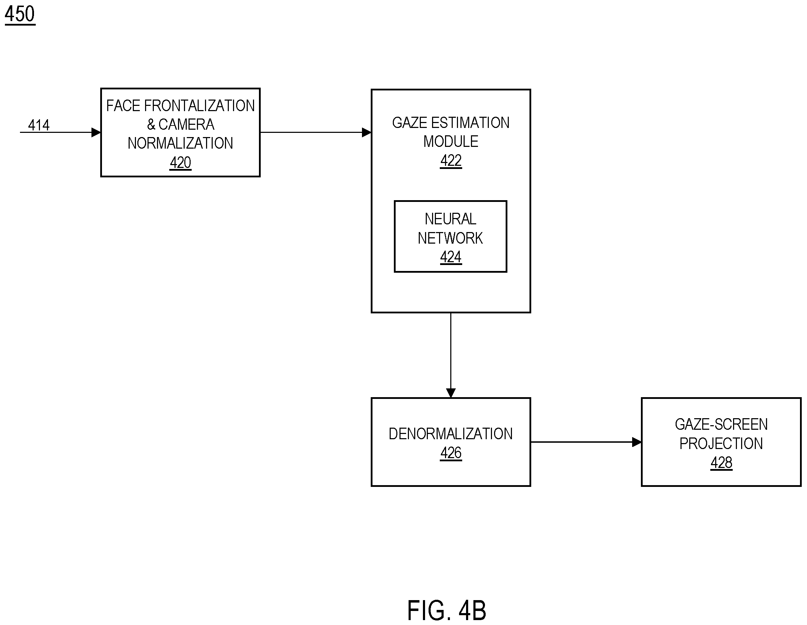

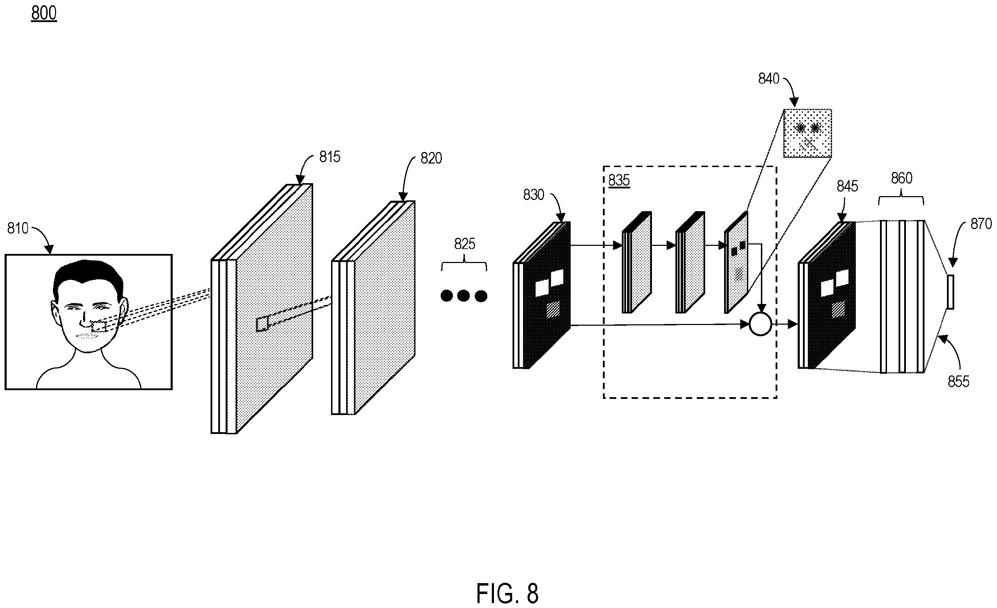

FIG. 8 shows an example of a deep neural network 800 for processing the cropped normalized input images to generate an estimated gaze direction, in accordance with various embodiments. The neural network 424 of FIG. 4B can be the deep neural network 800 of FIG. 8. As shown in FIG. 8, the neural network 800 includes convolutional layers, pooling layers, spatial weights, and fully connected layers. In some examples, the neural network also includes a regression function. As shown in FIG. 8, the spatial weights can be used to generate an average weight map.

The deep neural network 800 receives an input image 810, and the input image is processed with a first set of neural network layers 815, a second set of neural network layer 820, and additional sets of neural network layers 825. In various examples, the sets of neural network layers 815, 820, 825 each include one or more convolutional layers and one or more pooling layers. Each set of neural network layers 815, 820, 825 is smaller than the previous set of neural network layers 815, 820, 825. The output from the additional sets of neural network layers 825 is a feature tensor 830. The feature tensor 830 is input to a spatial weights module 835, which generates a weight map 840. The weight map 840 is applied to the feature tensor 830 using element-wise multiplication to generate an output tensor 845. The output tensor 845 is fed into a number of fully connected neural network layers 860. In some examples, the output from each of the fully connected layers further decreases in size. In various examples, the output from the fully connected neural network layers 860 undergoes a regression function to generate a deep neural network gaze determination output 870. In some examples, the gaze determination output 870 is a pair of directional angles. The functions of various layers of the neural network 800 are discussed in greater detail with respect to the neural network shown in FIG. 11.

Referring back to FIG. 4B, the neural network 424 outputs a pair of directional angles. In various examples, the pair of directional angles represents the gaze direction of the eyes. The neural network 424 output can include an estimated gaze direction in the normalized coordinate system. Additionally, the neural network 424 output can include an assessed uncertainty in the gaze direction estimation. In some examples, the uncertainty is determined using a "Pinball Loss" function designed for quantile regression. In various examples, the neural network 424 can be trained to predict a range of quantiles rather than single point estimation. In some examples, the uncertainty in the gaze direction estimation is referred to as angular confidence.

The two pairs of directional angles (the gaze direction in the normalized coordinate system and the angular confidence) are output from the neural network 424 to a denormalization module 426. Denormalization transforms the normalized gaze direction and angular confidence outputs to the real camera coordinate system, and generates a gaze direction vector output and gaze direction uncertainty measurement output. In some examples, denormalization is performed by rotating the gaze direction vector from the coordinates of the virtual camera to the coordinates of the real camera. Thus, in some examples, with reference to FIG. 7, denormalization rotates the gaze direction vector from the coordinate system on the right side of FIG. 7 back to the coordinate system on the left side of FIG. 7. In various examples, the distance between the screen and the face does not affect the directional angle of the gaze rotation, but it can affect the reference point. Additionally, denormalization transforms the angular confidence output using greatest potential error that the neural network 424 estimated, where the greatest potential error is the gaze direction plus the uncertainty in the gaze direction.

The denormalized output is received at a gaze-screen projection module 428. The gaze-screen projection module 428 estimates the initial gaze position on the screen by projecting the gaze direction vector. The gaze-screen projection module 428 utilizes the estimated face location in relation to the camera, along with the initial calibration procedure that established the geometrical relationship between the screen and the camera. In the multiple screen case, the projection is performed separately for each screen.

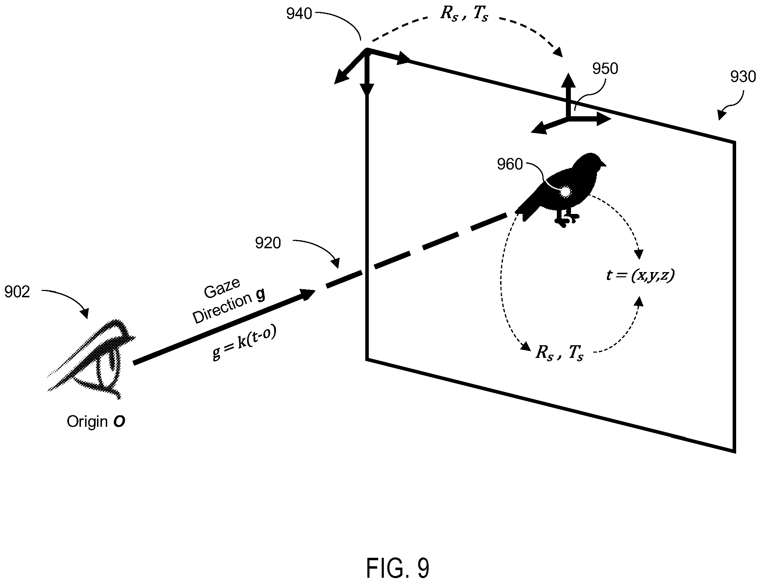

Gaze-screen projection is described with reference to FIG. 9, in accordance with various embodiments. In particular, as shown in FIG. 9, using the gaze direction g, and the 3D relationship between the screen and the face (FIG. 9 depicts the eye 902), the user's line-of-sight is intersected with the plane of the screen 930. In various examples, algebraic calculations can be used to determine the point-plane intersection at the projection point 960. In various examples, the projection point 960 can be represented as $p=(u,v)$. The coordinates of the point of intersection between the user's line-of-sight and the plane of the screen (i.e., the projection point 960) are converted to pixels using the initial screen calibration on the computing device set-up. In some examples, screen coordinate system 940 can be converted to a camera coordinate system 950, and vice versa. The target at the projection point 960 can be represented in the camera coordinate system 950 as target $t-(x,y,z)$. In some examples, the pose $\{R_s, T_s\}$ of the screen coordinate system 940 with respect to the camera coordinate system 950 can be used to determine the target t, where $R_s$ is the rotation matrix and $T_s$ is the translation matrix.

In various implementations, the projection of the uncertainty of the gaze direction determination is modeled as circular. In particular, a radius of a circle of confidence is determined based on the point of intersection 960 and the uncertainty. The radius of the circle of confidence is determined in pixels on the screen 930, resulting in an initial estimation of gaze position on the screen 930 and the gaze position angular confidence.

In some implementations, the gaze position and the gaze pixel location estimation is temporally filtered based on previous gaze pixel locations determinations. In general, the gaze position is unlikely to change significantly between frames. Since the initial gaze position determination described above can be temporally noisy, the gaze position determinations from multiple frames can be smoothed. In general, the assumption is that the frequency at which gaze characteristics change is lower than the frame rate (the sampling frequency). Thus, in some examples, the gaze position determination can be smoothed using a smoothing algorithm. In one example, the smoothing algorithm assumes that the most recent gaze position determination is the most accurate, and weighs the most recent gaze position determination more than a less recent gaze position determination. One example smoothing algorithm is shown in Equation (1) below:

$$g\left(fr_1 \ldots fr_N\right) = \frac{\sum_{n=1}^{N} n \cdot g\left(fr_2\right)}{\sum_{n=1}^{N} n} = \frac{1 \cdot g\left(fr_1\right) + 2 \cdot g\left(fr_2\right) + \ldots + N \cdot g\left(fr_N\right)}{1 + 2 + \ldots + N}$$

$$(1)$$

*Example Method of Eye Gaze Determination*

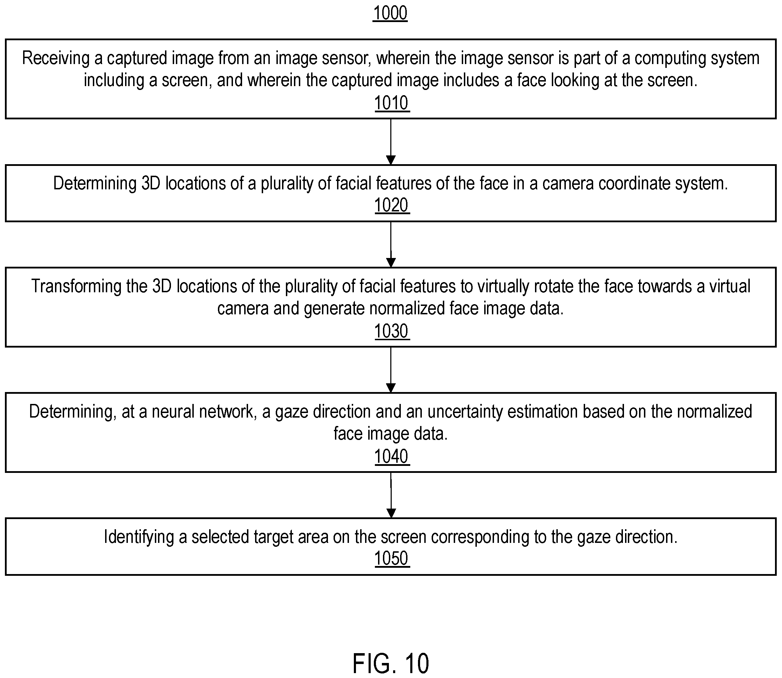

FIG. 10 is a flowchart showing a method 1000 of eye gaze determination, in accordance with various embodiments. The method 1000 may be performed by the deep learning system 100 in FIG. 1. Although the method 1000 is described with reference to the flowchart illustrated in FIG. 10, many other methods for eye gaze determination may alternatively be used. For example, the order of execution of the steps in FIG. 10 may be changed. As another example, some of the steps may be changed, eliminated, or combined.

At step 1010, a captured image is received from an image sensor. The image sensor is part of a computing system including a screen. The computing system can be a work station. The captured image includes a face looking at the screen. In some examples, the computing system includes multiple screens and the captured image includes a face looking at one of the multiple screens.

At step 1020, three-dimensional (3D) locations are determined of a plurality of facial features of the face in a camera coordinate system. In some examples, the location of the face in the captured image from step 1010 is determined, and, based on the captured image, 2D feature locations are determined for the plurality of features. The plurality of features can include facial features such as eyes, nose, and mouth. In some examples, determining the 3D locations includes transforming the 2D feature locations to the 3D feature locations. In some examples, a 2D-3D correspondence module, such as the 2D-3D correspondence module 408 discussed with respect to FIGS. 4A-4B, determines the 3D locations of the plurality of facial features in the camera coordinate system.

At step 1030, the 3D locations of the plurality of facial features are transformed to virtually rotate the face toward a virtual camera and generate normalized face image data. In some examples, a 3D understanding of the scene in the captured image is used to virtually move the virtual camera to a location directly in front of the face. The 3D understanding of the scene can include transformed 3D facial feature locations.

At step 1040, a gaze direction and an uncertainty estimation are determined by a neural network. The neural network receives the normalized face image data and processes the normalized face image data to generate the gaze direction and uncertainty estimation. In some examples, the neural network outputs two pairs of directional angles.

At step 1050, a selected target area on the screen corresponding to the gaze direction is identified. The selected target area is based on the gaze direction and the uncertainty estimation generated by the neural network. In some examples, the gaze direction corresponds to a point on the screen, the uncertainty estimation is a degree of uncertainty that can be represented as a circle (or an oval, an ellipse, or other shape) around the point.

In some examples, the selected target area is identified by denormalizing the gaze direction to generate a gaze direction vector, and determining a point of intersection for the gaze direction vector with the screen. In some examples, the uncertainty estimation is denormalized and used to determine a radius of confidence around the point of intersection.

*Example Deep Neural Network*

FIG. 11 illustrates an example DNN 1100, in accordance with various embodiments. For purpose of illustration, the DNN 1100 in FIG. 11 is a CNN. In other embodiments, the DNN 1100 may be other types of DNNs. The DNN 1100 is trained to receive images including faces and output a gaze position determination, including a gaze direction and an uncertainty estimation, In some examples, the DNN 1100 outputs a selected target area on a screen corresponding to a gaze direction. In the embodiments of FIG. 11, the DNN 1100 receives an input image 1105 that includes objects 1115, 1125, and 1135. As used in the gaze position determination system 400, the input image 1105 includes a face and one or more other objects. The DNN 1100 includes a sequence of layers comprising a plurality of convolutional layers 1110 (individually referred to as "convolutional layer 1110"), a plurality of pooling layers 1120 (individually referred to as "pooling layer 1120"), and a plurality of fully connected layers 1130 (individually referred to as "fully connected layer 1130"). In other embodiments, the DNN 1100 may include fewer, more, or different layers. In some examples, the DNN 1100 uses the high level understanding 1102 to decrease the number of layers and improve DNN 1100 efficiency. In an inference of the DNN 1100, the layers of the DNN 1100 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 1110 summarize the presence of features in the input image 1105. The convolutional layers 1110 function as feature extractors. The first layer of the DNN 1100 is a convolutional layer 1110. In an example, a convolutional layer 1110 performs a convolution on an input tensor 1140 (also referred to as IFM 1140) and a filter 1150. As shown in FIG. 11, the IFM 1140 is represented by a $7 \times 7 \times 3$ three-dimensional (3D) matrix. The IFM 1140 includes 3 input channels, each of which is represented by a $7 \times 7$ two dimensional (2D) matrix. The $7 \times 7$ 2D matrix includes 7 input elements (also referred to as input points) in each row and seven input elements in each column. The filter 1150 is represented by a $4 \times 3 \times 3$ 3D matrix. The filter 1150 includes 3 kernels, each of which may correspond to a different input channel of the IFM 1140. A kernel is a 2D matrix of weights, where the weights are arranged in columns and rows. A kernel can be smaller than the IFM. In the embodiments of FIG. 11, each kernel is represented by a $3 \times 3$ 2D matrix. The $3 \times 3$ kernel includes 3 weights in each row and three weights in each column. Weights can be initialized and updated by backpropagation using gradient descent. The magnitudes of the weights can indicate importance of the filter 1150 in extracting features from the IFM 1140.

The convolution includes MAC operations with the input elements in the IFM 1140 and the weights in the filter 1150. The convolution may be a standard convolution 1163 or a depthwise convolution 1183. In the standard convolution 1163, the whole filter 1150 slides across the IFM 1140. All the input channels are combined to produce an output tensor 1160 (also referred to as output feature map (OFM) 1160). The OFM 1160 is represented by a $5 \times 5$ 2D matrix. The $5 \times 5$ 2D matrix includes 5 output elements (also referred to as output points) in each row and five output elements in each column. For purpose of illustration, the standard convolution includes one filter in the embodiments of FIG. 11. In embodiments where there are multiple filters, the standard convolution may produce multiple output channels in the OFM 1160.

The multiplication applied between a kernel-sized patch of the IFM 1140 and a kernel may be a dot product. A dot product is the elementwise multiplication between the kernel-sized patch of the IFM 1140 and the corresponding kernel, which is then summed, always resulting in a single value. Because it results in a single value, the operation is often referred to as the "scalar product." Using a kernel smaller than the IFM 1140 is intentional as it allows the same kernel (set of weights) to be multiplied by the IFM 1140 multiple times at different points on the IFM 1140. Specifically, the kernel is applied systematically to each overlapping part or kernel-sized patch of the IFM 1140, left to right, top to bottom. The result from multiplying the kernel with the IFM 1140 one time is a single value. As the kernel is applied multiple times to the IFM 1140, the multiplication result is a 2D matrix of output elements. As such, the 2D output matrix (i.e., the OFM 1160) from the standard convolution 1163 is referred to as an OFM.

In the depthwise convolution 1183, the input channels are not combined. Rather, MAC operations are performed on an individual input channel and an individual kernel and produce an output channel. As shown in FIG.11, the depthwise convolution 1183 produces a depthwise output tensor 1180. The depthwise output tensor 1180 is represented by a $5 \times 5 \times 3$ 3D matrix. The depthwise output tensor 1180 includes 3 output channels, each of which is represented by a $5 \times 5$ 2D matrix. The $5 \times 5$ 2D matrix includes 5 output elements in each row and five output elements in each column. Each output channel is a result of MAC operations of an input channel of the IFM 1140 and a kernel of the filter 1150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 1193 is then performed on the depthwise output tensor 1180 and a $1 \times 1 \times 3$ tensor 1190 to produce the OFM 1160.

The OFM 1160 is then passed to the next layer in the sequence. In some embodiments, the OFM 1160 is passed through an activation function. An example activation function is the rectified linear activation function (ReLU). ReLU is a calculation that returns the value provided as input directly, or the value zero if the input is zero or less. The convolutional layer 1110 may receive several images as input and calculate the convolution of each of them with each of the kernels. This process can be repeated several times. For instance, the OFM 1160 is passed to the subsequent convolutional layer 1110 (i.e., the convolutional layer 1110 following the convolutional layer 1110 generating the OFM 1160 in the sequence). The subsequent convolutional layers 1110 perform a convolution on the OFM 1160 with new kernels and generates a new feature map. The new feature map may also be normalized and resized. The new feature map can be kernelled again by a further subsequent convolutional layer 1110, and so on.

In some embodiments, a convolutional layer 1110 has four hyperparameters: the number of kernels, the size F kernels (e.g., a kernel is of dimensions $F \times F \times D$ pixels), the S step with which the window corresponding to the kernel is dragged on the image (e.g., a step of one means moving the window one pixel at a time), and the zero-padding P (e.g., adding a black contour of P pixels thickness to the input image of the convolutional layer 1110). The convolutional layers 1110 may perform various types of convolutions, such as 2-dimensional convolution, dilated or atrous convolution, spatial separable convolution, depthwise separable convolution, transposed convolution, and so on. The DNN 1100 includes 16 convolutional layers 1110. In other embodiments, the DNN 1100 may include a different number of convolutional layers.

The pooling layers 1120 down-sample feature maps generated by the convolutional layers, e.g., by summarizing the presence of features in the patches of the feature maps. A pooling layer 1120 is placed between two convolution layers 1110: a preceding convolutional layer 1110 (the convolution layer 1110 preceding the pooling layer 1120 in the sequence of layers) and a subsequent convolutional layer 1110 (the convolution layer 1110 subsequent to the pooling layer 1120 in the sequence of layers). In some embodiments, a pooling layer 1120 is added after a convolutional layer 1110, e.g., after an activation function (e.g., ReLU, etc.) has been applied to the OFM 1160.

A pooling layer 1120 receives feature maps generated by the preceding convolution layer 1110 and applies a pooling operation to the feature maps. The pooling operation reduces the size of the feature maps while preserving their important characteristics. Accordingly, the pooling operation improves the efficiency of the CNN and avoids over-learning. The pooling layers 1120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is $2 \times 2$ pixels applied with a stride of two pixels, so that the pooling operation reduces the size of a feature map by a factor of 2, e.g., the number of pixels or values in the feature map is reduced to one quarter the size. In an example, a pooling layer 1120 applied to a feature map of $6 \times 6$ results in an output pooled feature map of $3 \times 3$. The output of the pooling layer 1120 is inputted into the subsequent convolution layer 1110 for further feature extraction. In some embodiments, the pooling layer 1120 operates upon each feature map separately to create a new set of the same number of pooled feature maps.

The fully connected layers 1130 are the last layers of the CNN. The fully connected layers 1130 may be convolutional or not. The fully connected layers 1130 receive an input operand. The input operand defines the output of the convolutional layers 1110 and pooling layers 1120 and includes the values of the last feature map generated by the last pooling layer 1120 in the sequence. The fully connected layers 1130 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 1130 by using a logistic function (binary classification) or a softmax function (multi-class classification) as an activation function.

In some embodiments, the fully connected layers 1130 classify the input image 1105 and return an operand of size N, where N is the number of classes in the image classification problem. In the embodiments of FIG. 11, N equals 3, as there are three objects 1115, 1125, and 1135 in the input image. Each element of the operand indicates the probability for the input image 1105 to belong to a class. To calculate the probabilities, the fully connected layers 1130 multiply each input element by weight, make the sum, and then apply an activation function (e.g., logistic if N=2, softmax if N>2). This is equivalent to multiplying the input operand by the matrix containing the weights. In an example, the vector includes 3 probabilities: a first probability indicating the object 1115 being a face, a second probability indicating the object 1125 being a window, and a third probability indicating the object 1135 being a chair. In other embodiments where the input image 1105 includes different objects or a different number of objects, the individual values can be different.

*Example Computing Device*

FIG. 12 is a block diagram of an example computing device 1200, in accordance with various embodiments. In some embodiments, the computing device 1200 may be used for at least part of the deep learning system 100 in FIG. 1. A number of components are illustrated in FIG. 12 as included in the computing device 1200, but any one or more of these components may be omitted or duplicated, as suitable for the application. In some embodiments, some or all of the components included in the computing device 1200 may be attached to one or more motherboards. In some embodiments, some or all of these components are fabricated onto a single system on a chip (SoC) die. Additionally, in various embodiments, the computing device 1200 may not include one or more of the components illustrated in FIG. 12, but the computing device 1200 may include interface circuitry for coupling to the one or more components. For example, the computing device 1200 may not include a display device 1206, but may include display device interface circuitry (e.g., a connector and driver circuitry) to which a display device 1206 may be coupled. In another set of examples, the computing device 1200 may not include a video input device 1218 or a video output device 1208, but may include video input or output device interface circuitry (e.g., connectors and supporting circuitry) to which a video input device 1218 or video output device 1208 may be coupled.

The computing device 1200 may include a processing device 1202 (e.g., one or more processing devices). The processing device 1202 processes electronic data from registers and/or memory to transform that electronic data into other electronic data that may be stored in registers and/or memory. The computing device 1200 may include a memory 1204, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1204 may include memory that shares a die with the processing device 1202. In some embodiments, the memory 1204 includes one or more non-transitory computer-readable media storing instructions executable for occupancy mapping or collision detection, e.g., the method 1000 described above in conjunction with FIG. 10 or some operations performed by the DNN system 100 in FIG. 1 of the DNN system 1100 of FIG. 11. The instructions stored in the one or more non-transitory computer-readable media may be executed by the processing device 1202.

In some embodiments, the computing device 1200 may include a communication chip 1212 (e.g., one or more communication chips). For example, the communication chip 1212 may be configured for managing wireless communications for the transfer of data to and from the computing device 1200. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 1212 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1212 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1212 may operate in accordance with other wireless protocols in other embodiments. The computing device 1200 may include an antenna 1222 to facilitate wireless communications and/or to receive other wireless communications (such as AM or FM radio transmissions).

In some embodiments, the communication chip 1212 may manage wired communications, such as electrical, optical, or any other suitable communication protocols (e.g., the Ethernet). As noted above, the communication chip 1212 may include multiple communication chips. For instance, a first communication chip 1212 may be dedicated to shorter-range wireless communications such as Wi-Fi or Bluetooth, and a second communication chip 1212 may be dedicated to longer-range wireless communications such as global positioning system (GPS), EDGE, GPRS, CDMA, WiMAX, LTE, EV-DO, or others. In some embodiments, a first communication chip 1212 may be dedicated to wireless communications, and a second communication chip 1212 may be dedicated to wired communications.

The computing device 1200 may include battery/power circuitry 1214. The battery/power circuitry 1214 may include one or more energy storage devices (e.g., batteries or capacitors) and/or circuitry for coupling components of the computing device 1200 to an energy source separate from the computing device 1200 (e.g., AC line power).

The computing device 1200 may include a display device 1206 (or corresponding interface circuitry, as discussed above). The display device 1206 may include any visual indicators, such as a heads-up display, a computer monitor, a projector, a touchscreen display, a liquid crystal display (LCD), a light-emitting diode display, or a flat panel display, for example.

The computing device 1200 may include a video output device 1208 (or corresponding interface circuitry, as discussed above). The video output device 1208 may include any device that generates an audible indicator, such as speakers, headsets, or earbuds, for example.

The computing device 1200 may include a video input device 1218 (or corresponding interface circuitry, as discussed above). The video input device 1218 may include any device that generates a signal representative of a sound, such as microphones, microphone arrays, or digital instruments (e.g., instruments having a musical instrument digital interface (MIDI) output).

The computing device 1200 may include a GPS device 1216 (or corresponding interface circuitry, as discussed above). The GPS device 1216 may be in communication with a satellite-based system and may receive a location of the computing device 1200, as known in the art.

The computing device 1200 may include another output device 1210 (or corresponding interface circuitry, as discussed above). Examples of the other output device 1210 may include a video codec, a video codec, a printer, a wired or wireless transmitter for providing information to other devices, or an additional storage device.

The computing device 1200 may include another input device 1220 (or corresponding interface circuitry, as discussed above). Examples of the other input device 1220 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1200 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1200 may be any other electronic device that processes data.

*Selected Examples*

The following paragraphs provide various examples of the embodiments disclosed herein.

Example 1 provides a computer-implemented method, including receiving a captured image from an image sensor, where the image sensor is part of a computing system including a screen, and where the captured image includes a face looking at the screen; determining three-dimensional (3D) locations of a plurality of facial features of the face in a camera coordinate system; transforming the 3D locations of the plurality of facial features to virtually rotate the face towards a virtual camera and generate normalized face image data; determining, at a neural network, a gaze direction and an uncertainty estimation based on the normalized face image data; and identifying a selected target area on the screen corresponding to the gaze direction.

Example 2 provides the computer-implemented method of example 1, further including calibrating the computing system including determining a geometric relationship between the screen and the image sensor.

Example 3 provides the computer-implemented method of example 1, further including determining a location of the face in the captured image including determining two-dimensional (2D) feature locations for the plurality of facial features, and transforming the 2D feature locations to the 3D feature locations.

Example 4 provides the computer-implemented method of example 1, further including denormalizing the gaze direction and the uncertainty estimation to generate a gaze direction vector and a denormalized uncertainty estimation, and determining a point of intersection for the gaze direction vector with the screen.

Example 5 provides the computer-implemented method of example 4, further including determining a region of confidence around the point of intersection, where the region of confidence is based on the denormalized uncertainty estimation.

Example 6 provides the computer-implemented method of example 1, further including cropping the normalized face image to generate a cropped normalized input image, and determining the gaze direction and the uncertainty estimation based on the cropped normalized input image.

Example 7 provides the computer-implemented method of example 1, where the screen is a first screen and the computing system includes a second screen, and where identifying the selected target area corresponding to the gaze direction includes identifying the selected target area on one of the first screen and the second screen.

Example 8 provides one or more non-transitory computer-readable media storing instructions executable to perform operations, the operations including receiving a captured image from an image sensor, where the image sensor is part of a computing system including a screen, and where the captured image includes a face looking at the screen; determining three-dimensional (3D) locations of a plurality of facial features of the face in a camera coordinate system; transforming the 3D locations of the plurality of facial features to virtually rotate the face towards a virtual camera and generate normalized face image data; determining, at a neural network, a gaze direction and an uncertainty estimation based on the normalized face image data; and identifying a selected target area on the screen corresponding to the gaze direction.

Example 9 provides the one or more non-transitory computer-readable media of example 8, the operations further including calibrating the computing system including determining a geometric relationship between the screen and the image sensor.

Example 10 provides the one or more non-transitory computer-readable media of example 8, the operations further including determining a location of the face in the captured image including determining two-dimensional (2D) feature locations for the plurality of facial features, and transforming the 2D feature locations to the 3D feature locations.

Example 11 provides the one or more non-transitory computer-readable media of example 8, the operations further including denormalizing the gaze direction and the uncertainty estimation to generate a gaze direction vector and a denormalized uncertainty estimation, and determining a point of intersection for the gaze direction vector with the screen.

Example 12 provides the one or more non-transitory computer-readable media of example 11, the operations further including determining a region of confidence around the point of intersection, where the region of confidence is based on the denormalized uncertainty estimation.

Example 13 provides the one or more non-transitory computer-readable media of example 8, the operations further including cropping the normalized face image to generate a cropped normalized input image, and determining the gaze direction and the uncertainty estimation based on the cropped normalized input image.

Example 14 provides the one or more non-transitory computer-readable media of example 8, where the screen is a first screen and the computing system includes a second screen, and where identifying the selected target area corresponding to the gaze direction includes identifying the selected target area on one of the first screen and the second screen.

Example 15 provides an apparatus, including a computer processor for executing computer program instructions; and a non-transitory computer-readable memory storing computer program instructions executable by the computer processor to perform operations including receiving a captured image from an image sensor, where the image sensor is part of a computing system including a screen, and where the captured image includes a face looking at the screen; determining three-dimensional (3D) locations of a plurality of facial features of the face in a camera coordinate system; transforming the 3D locations of the plurality of facial features to virtually rotate the face towards a virtual camera and generate normalized face image data; determining, at a neural network, a gaze direction and an uncertainty estimation based on the normalized face image data; and identifying a selected target area on the screen corresponding to the gaze direction.

Example 16 provides the apparatus of example 15, where the operations further include calibrating the computing system including determining a geometric relationship between the screen and the image sensor.

Example 17 provides the apparatus of example 15, where the operations further include determining a location of the face in the captured image including determining two-dimensional (2D) feature locations for the plurality of facial features, and transforming the 2D feature locations to the 3D feature locations.

Example 18 provides the apparatus of example 15, where the operations further include denormalizing the gaze direction and the uncertainty estimation to generate a gaze direction vector and a denormalized uncertainty estimation, and determining a point of intersection for the gaze direction vector with the screen.

Example 19 provides the apparatus of example 18, where the operations further include determining a region of confidence around the point of intersection, where the region of confidence is based on the denormalized uncertainty estimation.

Example 20 provides the apparatus of example 15, where the operations further include cropping the normalized face image to generate a cropped normalized input image, and determining the gaze direction and the uncertainty estimation based on the cropped normalized input image.

Example 21 provides the computer-implemented method, the one or more non-transitory computer-readable media, and/or the apparatus of any of the above examples, wherein determining a region of confidence around the point of intersection includes determining a radius of confidence for the region of confidence, based on the denormalized uncertainty estimation.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A computer-implemented method, comprising:

   receiving a captured image from an image sensor, wherein the image sensor is part of a computing system including a screen, and wherein the captured image includes a face looking at the screen;
   determining three-dimensional (3D) locations of a plurality of facial features of the face in a camera coordinate system;
   transforming the 3D locations of the plurality of facial features to virtually rotate the face towards a virtual camera and generate normalized face image data;
   determining, using a neural network, a gaze direction and an uncertainty estimation based on the normalized face image data; and
identifying a selected target area on the screen corresponding to the gaze direction.

2. The computer-implemented method of claim 1, further comprising calibrating the computing system including determining a geometric relationship between the screen and the image sensor.

3. The computer-implemented method according to any of claims 1-2, further comprising determining a location of the face in the captured image including determining two-dimensional (2D) feature locations for the plurality of facial features, and transforming the 2D feature locations to the 3D locations.

4. The computer-implemented method according to any of claim 1-2, further comprising:

    denormalizing the gaze direction and the uncertainty estimation to generate a gaze direction vector and a denormalized uncertainty estimation, and
    determining a point of intersection for the gaze direction vector with the screen.

5. The computer-implemented method of claim 4, further comprising determining a region of confidence around the point of intersection, wherein the region of confidence is based on the denormalized uncertainty estimation.

6. The computer-implemented method according to any of claims 1-2, further comprising cropping the normalized face image data to generate a cropped normalized input image, and determining the gaze direction and the uncertainty estimation based on the cropped normalized input image.

7. The computer-implemented method according to any of claims 1-2, wherein the screen is a first screen and the computing system includes a second screen, and wherein identifying the selected target area corresponding to the gaze direction includes identifying the selected target area on one of the first screen and the second screen.

8. One or more non-transitory computer-readable media storing instructions executable to perform operations, the operations comprising:

    receiving a captured image from an image sensor, wherein the image sensor is part of a computing system including a screen, and wherein the captured image includes a face looking at the screen;
    determining three-dimensional (3D) locations of a plurality of facial features of the face in a camera coordinate system;
    transforming the 3D locations of the plurality of facial features to virtually rotate the face towards a virtual camera and generate normalized face image data;
    determining, using a neural network, a gaze direction and an uncertainty estimation based on the normalized face image data; and
    identifying a selected target area on the screen corresponding to the gaze direction.

9. The one or more non-transitory computer-readable media according to claim 8, the operations further comprising calibrating the computing system including determining a geometric relationship between the screen and the image sensor.

10. The one or more non-transitory computer-readable media according to any of claims 8-9, the operations further comprising determining a location of the face in the captured image including determining two-dimensional (2D) feature locations for the plurality of facial features, and transforming the 2D feature locations to the 3D locations.

11. The one or more non-transitory computer-readable media according to any of claims 8-9, the operations further comprising:

    denormalizing the gaze direction and the uncertainty estimation to generate a gaze direction vector and a denormalized uncertainty estimation, and
    determining a point of intersection for the gaze direction vector with the screen.

12. The one or more non-transitory computer-readable media according to claim 11, the operations further comprising determining a region of confidence around the point of intersection, wherein the region of confidence is based on the denormalized uncertainty estimation.

13. The one or more non-transitory computer-readable media according to any of claims 8-9, the operations further comprising cropping the normalized face image data to generate a cropped normalized input image, and determining the gaze direction and the uncertainty estimation based on the cropped normalized input image.

14. The one or more non-transitory computer-readable media according to claim 8, wherein the screen is a first screen and the computing system includes a second screen, and wherein identifying the selected target area corresponding to the gaze direction includes identifying the selected target area on one of the first screen and the second screen.

15. An apparatus, comprising:

a computer processor for executing computer program instructions; and
a non-transitory computer-readable memory storing computer program instructions executable by the computer processor to perform operations comprising:

receiving a captured image from an image sensor, wherein the image sensor is part of a computing system including a screen, and wherein the captured image includes a face looking at the screen;
determining three-dimensional (3D) locations of a plurality of facial features of the face in a camera coordinate system;
transforming the 3D locations of the plurality of facial features to virtually rotate the face towards a virtual camera and generate normalized face image data;
determining, using a neural network, a gaze direction and an uncertainty estimation based on the normalized face image data; and
identifying a selected target area on the screen corresponding to the gaze direction.

Deep Learning System 100

Interface Module 110

Gaze Position Determination Module 120

Training Module 130

Validation Module 140

Inference Module 150

Datastore 160

FIG. 1

FIG. 2

EP 4 607 477 A1

FIG. 3B

FIG. 3A

FACE & LANDMARKS DETECTION 404

2D-3D CORRESPONDENCES 408

HEAD-POSE ESTIMATION 412

FIG. 4A

450

FACE FRONTALIZATION & CAMERA NORMALIZATION
420

414 →

GAZE ESTIMATION MODULE
422

NEURAL NETWORK
424

DENORMALIZATION
426

GAZE-SCREEN PROJECTION
428

FIG. 4B

FIG. 5

EP 4 607 477 A1

600

606

604

608

610

FIG. 6

EP 4 607 477 A1

FIG. 7

FIG. 8

FIG. 9

EP 4 607 477 A1

1000

Receiving a captured image from an image sensor, wherein the image sensor is part of a computing system including a screen, and wherein the captured image includes a face looking at the screen.
1010

Determining 3D locations of a plurality of facial features of the face in a camera coordinate system.
1020

Transforming the 3D locations of the plurality of facial features to virtually rotate the face towards a virtual camera and generate normalized face image data.
1030

Determining, at a neural network, a gaze direction and an uncertainty estimation based on the normalized face image data.
1040

Identifying a selected target area on the screen corresponding to the gaze direction.
1050

FIG. 10

FIG. 11

EP 4 607 477 A1

COMPUTING DEVICE
1200

| PROCESSING DEVICE 1202 | COMMUNICATION CHIP 1212 |
| MEMORY 1204 | BATTERY/POWER 1214 |
| DISPLAY DEVICE 1206 | GPS DEVICE 1216 |
| VIDEO OUTPUT DEVICE 1208 | VIDEO INPUT DEVICE 1218 |
| OTHER OUTPUT DEVICE 1210 | OTHER INPUT DEVICE 1220 |

ANTENNA

1222

FIG. 12

Europäisches
Patentamt
European
Patent Office
Office européen
des brevets

# EUROPEAN SEARCH REPORT

**Application Number**

EP 25 15 3341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/074569 A1 (DROZDOV GILAD [IL] ET AL) 9 March 2023 (2023-03-09)<br>* the whole document * | 1-15 | INV.<br>G06V10/82<br>G06V40/16<br>G06V40/18<br>G06F3/01<br>G06T3/60<br>G06T7/73<br>G06T7/80 |
| X | US 2022/334637 A1 (SHARMA JATIN [US] ET AL) 20 October 2022 (2022-10-20)<br><br>* the whole document * | 1-3, 7-10,14, 15 | |
| A | US 2024/013439 A1 (FUNES MORA KENNETH ALBERTO [CH]) 11 January 2024 (2024-01-11)<br>* the whole document * | 1-15 | |
| A | US 7 306 337 B2 (RENSSELAER POLYTECH INST [US]) 11 December 2007 (2007-12-11)<br>* the whole document * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 4 June 2025 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 607 477 A1**

## ANNEX TO THE EUROPEAN SEARCH REPORT
## ON EUROPEAN PATENT APPLICATION NO.

EP 25 15 3341

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| US 2023074569 A1 | 09-03-2023 | US 2022050521 A1 | 17-02-2022 |
| | | US 2023074569 A1 | 09-03-2023 |
| | | WO 2020110121 A1 | 04-06-2020 |
| US 2022334637 A1 | 20-10-2022 | EP 4327242 A1 | 28-02-2024 |
| | | US 2022334637 A1 | 20-10-2022 |
| | | US 2023195224 A1 | 22-06-2023 |
| | | WO 2022225683 A1 | 27-10-2022 |
| US 2024013439 A1 | 11-01-2024 | EP 4233004 A1 | 30-08-2023 |
| | | US 2024013439 A1 | 11-01-2024 |
| | | WO 2022084803 A1 | 28-04-2022 |
| US 7306337 B2 | 11-12-2007 | NONE | |

EPO FORM P0459